# EUROPEAN PATENT APPLICATION

(11) **EP 1 022 592 A1**
(43) Date of publication of application: **26.07.2000**
(21) Application number: 00101075.0
(22) Date of filing: 20.01.2000
(51) Int. Cl.: G02B 6/22, G02B 6/16, C03C 25/10

(54) **Plastic clad optical fiber and manufacturing method therof**

(30) Priority: 21.01.1999 JP 1294199
(71) Applicant: SUMITOMO ELECTRIC INDUSTRIES, LTD., Osaka-shi, Osaka (JP)
(72) Inventor: Mishima, Takayuki, c/o Osaka Works of Sumitomo, Konohana-ku, Osaka-shi, Osaka (JP); Sogabe, Kazuki, c/o Osaka Works of Sumitomo, Konohana-ku, Osaka-shi, Osaka (JP)
(74) Representative: Grünecker, Kinkeldey, Stockmair & Schwanhäusser Anwaltssozietät

(57) **Abstract**

A plastic clad optical fiber improved to suppress increase in transmission loss caused by bending is provided. On an outer periphery of a core (1) formed of quartz glass, an inner clad (2) having a prescribed refractive index smaller than the refractive index of the outer peripheral portion of the core is provided. Inner clad (2) is formed of quartz glass or a plastic having Young's modulus of at least 50 Kg/mm². On the outer periphery of inner clad (2), an outer clad (3) formed of a plastic having a prescribed refractive index smaller than the refractive index of the inner clad (2) is provided. The ratio of the outer diameter of core (1) with respect to the outer diameter of inner clad (2) is 0.90 to 0.99.

## Description

### BACKGROUND OF THE INVENTION

### Field of the Invention

The present invention generally relates to a plastic clad optical fiber and, more specifically to a plastic clad optical fiber so improved as to enable suppression of increase in transmission loss caused by lateral pressure. The present invention also relates to a method of manufacturing such a plastic clad optical fiber.

### Description of the Background Art

A so called plastic clad optical fiber having a clad of fluorine resin provided on a quartz core has been proposed (Japanese Patent Laying-Open No. 1-261602). The conventional optical fiber has a core formed of quartz glass, and a clad formed of a fluorine containing resin of which index of refraction being smaller than that of the core, provided around the core. Refractive index distribution of the core is of grated index type.

An optical fiber having a core formed of a glass base material having square distribution type refractive index profile, a plastic thin film clad provided in tight contact around an outer periphery of the core, and a plastic coating provided on an outer periphery of the clad has also been proposed (Japanese Patent Laying-Open No. 3-245108).

The conventional optical fibers, however, have the problem of increased transmission loss when the plastic clad optical fiber receives lateral pressure caused by bending, for example.

More specifically, when a lateral pressure is applied to an optical fiber, a microbend occurs, resulting in mode conversion of the light propagating therethrough. Part of the light converted to higher mode leaks to the outside of the fiber, and therefore transmission loss increases when the optical fiber receives lateral pressure by bending, for example.

In a plastic clad optical fiber having a clad formed of such plastic material that has small Young's modulus, large strain results in the clad by the lateral pressure, and hence transmission loss tends to increase. Particularly when the core has square distribution type refractive index profile, increase in transmission loss caused by lateral pressure is more significant, as difference in refractive indexes of the outer peripheral portion of the core and the clad is smaller than when the core has uniform refractive index.

### SUMMARY OF THE INVENTION

The present invention was made to solve the above described problem, and its object is to provide a plastic clad optical fiber improved such that increase in transmission loss caused when the optical fiber receives lateral pressure by bending or the like can be suppressed.

A further object of the present invention is to provide a method of manufacturing such a plastic clad optical fiber.

According to an aspect of the present invention, the plastic clad optical fiber includes a core formed of quartz glass having α power distribution type refractive index profile. The value of α is from 1.5 to 3. On an outer periphery of the core, an inner clad formed of quartz glass or a plastic having Young's modulus of at least 50 Kg/mm² and having a prescribed refractive index smaller than the refractive index of the outer peripheral portion of the core is provided. On an outer periphery of the inner clad, an outer clad formed of plastic and having a prescribed refractive index smaller than that of the inner clad is provided. The ratio of the outer diameter of the core with respect to the outer diameter of the inner clad is 0.90 to 0.99.

According to the present invention, as the inner clad is formed of quartz glass or plastic having Young's modulus of at least 50 Kg/mm² and the ratio of the outer diameter of the core with respect to the outer diameter of the inner clad is 0.90 to 0.99, increase in transmission loss caused by lateral pressure can be suppressed.

In the plastic clad optical fiber according to another aspect, the plastic of the inner clad is a cured resin composite containing photo-curing fluoromethacrylate. This improves productivity.

In the plastic clad optical fiber in accordance with a still further aspect, the photo-curing fluoromethacrylate is a compound having at least two unsaturated bonds in a molecule. This improves degree of crosslinking and increases Young's modulus.

In the plastic clad optical fiber in accordance with a still further aspect, the plastic of the outer clad is a cured photo-curing resin composite containing fluoroacrylate or fluoromethacrylate (hereinafter referred to as fluoro(meth)acrylate).

This improves productivity and makes it possible to apply a crimp & cleave optical connector.

According to a still further aspect, the present invention provides a method of manufacturing a plastic clad optical fiber. First, a quartz glass rod including a core portion and an inner clad portion surrounding the core portion is drawn so that a glass fiber having a core and an inner clad is formed, and the glass fiber is coated with a resin composite and cured, so that an outer clad is formed.

According to this aspect, a plastic clad optical fiber having an inner clad formed of quartz glass and capable of suppressing increase in transmission loss caused by lateral pressure can be manufactured efficiently.

According to a still further aspect, in the method of manufacturing the plastic clad optical fiber, a glass rod having the inner clad portion and the core clad portion manufactured collectively is used as the quartz glass rod.

According to this aspect, a plastic clad optical fiber in which scattering loss of light at an interface between the core and the inner clad can be manufactured.

According to a still further aspect, the present invention provides a method of manufacturing a plastic clad optical fiber including the steps of: drawing a quartz glass rod to form the core; coating the core with a resin composite and curing the resin composite to form an inner clad; coating the inner clad with a resin composite, and curing the resin composite to form an outer clad.

According to this aspect, a plastic clad optical fiber having an inner clad formed of plastic and capable of suppressing increase in transmission loss caused by lateral pressure can be manufactured efficiently.

The foregoing and other objects, features, aspects and advantages of the present invention will become more apparent from the following detailed description of the present invention when taken in conjunction with the accompanying drawings.

### BRIEF DESCRIPTION OF THE DRAWING

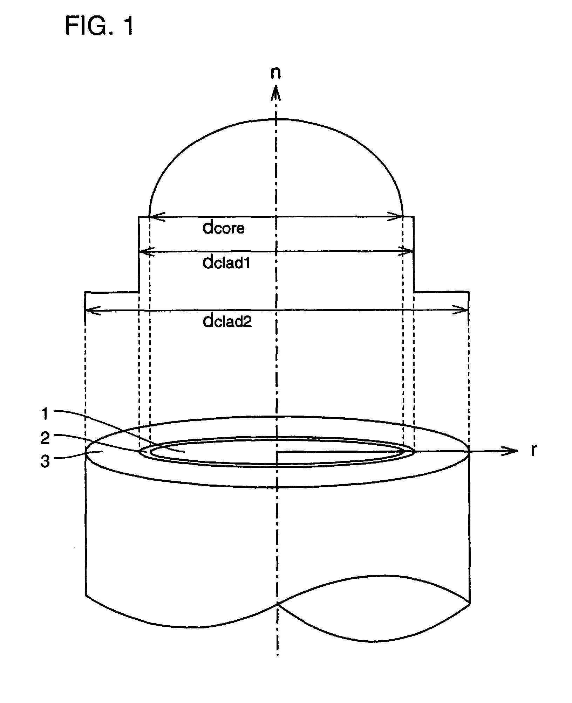

Fig. 1 represents a structure of a plastic clad optical fiber in accordance with an embodiment of the present invention and refractive index distribution in radial direction corresponding to the optical fiber.

### DESCRIPTION OF THE PREFERRED EMBODIMENTS

Embodiments of the present invention will be described in the following.

### First Embodiment

Fig. 1 represents a structure of the optical fiber in accordance with the first embodiment and the refractive index distribution in the radial direction of the optical fiber.

Referring to Fig. 1, the optical fiber in accordance with the first embodiment includes a core 1, an inner clad 2 having a prescribed refractive index smaller than the refractive index of the core and provided on an outer side of the core 1, and an outer clad 3 having a prescribed refractive index smaller than the refractive index of inner clad 2, provided on an outer side of the inner clad 2.

Core 1 is formed of a material which is capable of sufficiently lowering loss of the light propagating therein, for example, quartz glass. In order to improve refractive index, the quartz glass constituting the core 1 includes a dopant such as Ge, Ti, P or Al. Dopant concentration continuously increases toward the central axis of core 1. Therefore, refractive index n becomes higher toward the central axis.

The refractive index distribution is, for example, α power distribution type, in which at a certain radial distance from the central axis, the refractive index n is in proportion to the power of α of the distance. Preferably, the value α should be 1.5 to 3. Particularly, the value α should preferably be 2. Maximum refractive index at the center of core 1 should preferably be 1.450 to 1.500, and the maximum refractive index difference of core 1 should preferably be 0.9 to 2.5%.

It is preferred that outer diameter of (d_{core}) of core 1 is 90 to 600 µm.

Preferably, inner clad 2 is formed of such a material that can suppress increase in transmission loss caused by lateral pressure by suppressing lateral pressure to the core 1, and the refractive index thereof is preferably 1.400 to 1.490. Such a material for the inner clad 2 may be quartz glass or a plastic material having Young's modulus of at least 50 Kg/mm².

The plastic material may include cyclic perfluoro resin, a thermosetting or photo-curing fluoro(meth)acrylate resin, for example. In view of productivity of the fiber, photo-curing fluoro(meth)acrylate resin is preferred. To a thermosetting fluoro(meth)acrylate resin, a thermal polymerization initiator and a coupling agent forming a chemical bond with the quartz glass of the core are added.

To the photo-curing fluoro(meth)acrylate resin, a photopolymerization initiator and a coupling agent are added.

Examples of the thermal polymerization initiator are α, α'-azobisisobutyronitrile and benzoyl peroxide.

Examples of the photopolymerization initiator includes benzophenone, benzyl-benzoin, benzoyl peroxide, and 2-hydroxy-2-methyl-1-phenylpropane-1-one.

The coupling agent may be trimethoxyvinyl silane, methacryxypropyl trimethoxy silane, dimethylethoxyvinyl silane or the like.

In order to increase Young's modulus, it is preferred that the degree of crosslinking after curing is high. Therefore, the thermosetting or photo-curing fluoro(meth)acrylate resin should preferably be a compound having at least two unsaturated bonds in a molecule.

The ratio (d_{core}/d_{clad1}) of the outer diameter (d_{core}) of the core with respect to the outer diameter (d_{clad 1}) of the inner clad is adapted to be 0.90 to 0.99, in view of the effect of suppressing lateral pressure and transmission bandwidth characteristic of the fiber. The outer diameter of inner clad 2 (d_{clad1}) should preferably be 91 to 650 µm.

Outer clad 3 is formed of a plastic material. Examples of the plastic material may include cyclic perfluoro resin, thermosetting or photo-curing silicone resin, and fluoro(meth)acrylate resin. Photo-curing fluoro(meth)acrylate resin is preferable in view of productivity of the fiber and applicability of crimp & cleave optical connector which facilitates processing.

To the thermosetting silicone resin and fluoro(meth)acrylate resin, thermal polymerization initiator is added, and to the thermosetting fluoro(meth)acrylate resin, a coupling agent is further added.

To the photo-curing silicone resin and fluoro(meth)acrylate resin, photopolymerization initiator is added, and to the photo-curing fluoro(meth)acrylate resin, a coupling agent is further added.

Preferably, the refractive index of outer clad 3 should be 0.97 to 0.99 times that of the inner clad 2. The outer diameter of outer clad 3 (d_{clad2}) should preferably be 100 to 700 µm.

### Second Embodiment

The method of manufacturing the plastic clad optical fiber in accordance with the present invention will be described in the following.

Referring to Fig. 1, when the plastic clad optical fiber in accordance with the present invention has an inner clad 1 formed of quartz glass, a quartz glass rod which will be inner clad 2 and core 1 is manufactured, with the inner clad portion and the core portion processed collectively, by MCVD and OVD or VAD (Vapor-Phase Axial Deposition), for example. Alternatively, after the core portion is formed by OVD or VAD, the core portion is put in a hollow clad portion formed separately, and the inner clad portion is collapsed, so that the glass rod is manufactured in two steps.

Here, the method in which the inner clad portion and the core portion are manufacture collectively by VAD is preferred in order to decrease scattering loss of light at the interface portion between core 1 and inner clad 2. In order to attain the prescribed ratio of outer diameters of the core and the inner clad, the inner clad portion may be cut.

Thereafter, the resulting quartz glass rod is heated and drawn in a drawing furnace, so as to form a glass fiber having outer diameter of 91 to 650 µm consisting of a core 1 having the diameter of 90 to 600 µm and an inner clad 2. The glass fiber is coated, by using a dice, with a silicone resin or fluoro(meth)acrylate resin to which thermal polymerization initiator or photopolymerization initiator and a coupling agent are added or with a cyclic perfluoro resin dissolved in a solvent, which will be an outer clad, the coated glass fiber is thereafter heated or irradiated with ultraviolet ray so that the coating is cured or the solvent is volatilized to form outer clad 3, and thus a plastic clad optical fiber having an outer diameter of 100 to 700 µm is obtained.

In view of productivity, the method in which fluoro(meth)acrylate resin to which a photopolymerization initiator and the coupling agent are added is provided as a coating by using a dice, irradiated with ultraviolet ray and cured to form outer clad 3 is preferred. In order to prevent damage to the surface of inner clad 2 and in view of productivity, the process step of forming the glass fiber by drawing the quartz glass rod and the process step of forming the outer clad by coating the resin composite should be performed in tandem.

When the plastic clad optical fiber of the present invention has an inner clad 2 formed of plastic, first, the quartz glass rod to be core 1 is manufactured by MCVD and OVD or VAD.

Thereafter, the resulting quartz glass rod is heated and drawn in a drawing furnace to form a core 1 having the outer diameter of 90 to 600 µm. The core is coated, by using a dice, with fluoro(meth)acrylate resin to which a thermal polymerization initiator or photopolymerization initiator and a coupling agent are added, or with a cyclic perfluoro resin dissolved in a solvent, heated or irradiated with ultraviolet ray so that the coating is cured or the solvent is volatilized to form an inner clad, and thus a fiber having the outer diameter of 91 to 650 µm is obtained. In view of productivity, the method is preferred in which fluoro(meth)acrylate resin to which a photopolymerization initiator and a coupling agent are added is provided as a coating using a dice, irradiated with ultraviolet ray and cured to form inner clad 2.

Further, thus obtained fiber is coated, by using a dice, with a silicone resin or fluoro(meth)acrylate resin to which a thermal polymerization initiator or photopolymerization initiator is added, or with a cyclic perfluoro resin dissolved in a solvent, heated or irradiated with ultraviolet ray so that the coating is cured or the solvent is volatilized, to form outer clad 3. Thus, a plastic clad optical fiber having an outer diameter of 100 to 700 µm is obtained.

In view of productivity, the method is preferred in which fluoro(meth)acrylate resin to which photopolymerization initiator is added is provided as a coating by using a dice, irradiated with ultraviolet ray and cured to form outer clad 3. In order to prevent damage to the surface of core 1 and in view of productivity, the process step of forming core 1 by drawing the quartz glass rod and the process step of forming inner clad 2 by coating the resin composite should be performed in tandem. Further, in view of productivity, the process step of forming outer clad 3 on the resulting fiber should preferably be performed in tandem with the aforementioned two process steps.

### Examples

### Examples 1, 2, Comparative Example 1

Samples of glass fiber having outer diameter of 200 µm were manufactured by heating quartz glass rods each having a quartz glass core portion containing Ge as a dopant and an inner clad portion formed of pure quartz, manufactured by VAD method, with the ratio of the diameter of Ge containing portion with respect to the outer diameter varied as shown in Table 1.

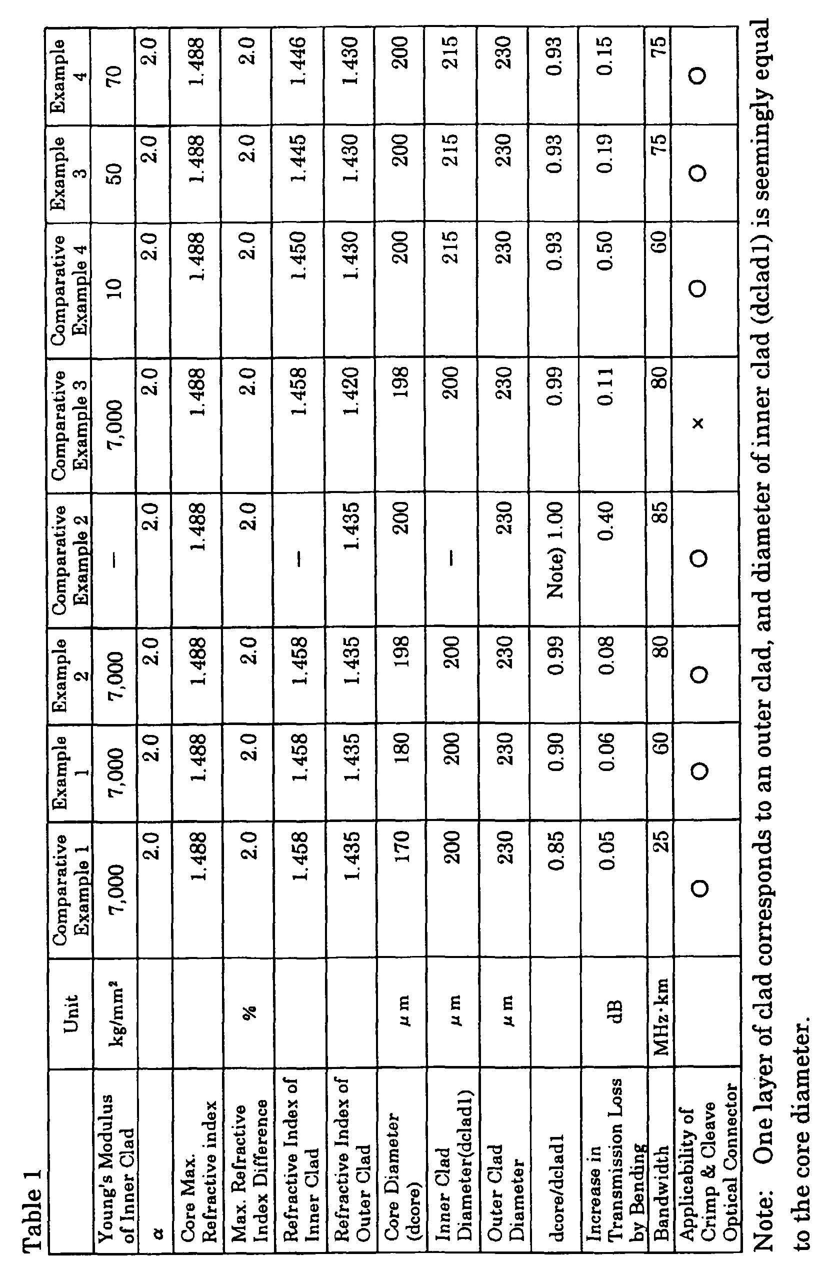

Thereafter, a resin composite including 70 parts by weight of fluoroacrylate resin represented by the chemical formula (1), 30 parts by weight of fluoromethacrylate resin represented by the chemical formula (2), 1 part by weight of 2-hydroxy-2-methyl-1-phenylpropane-1-one as a photopolymerization initiator and 1 part by weight of dimethylethoxyvinyl silane as a coupling agent was provided as a coating on the glass fiber by using a dice, in tandem with the formation of glass fiber, and cured by irradiation with ultraviolet ray to form an outer clad, and thus a plastic clad optical fiber having the outer diameter of 230 µm was obtained.

### [Chemical formula 1]

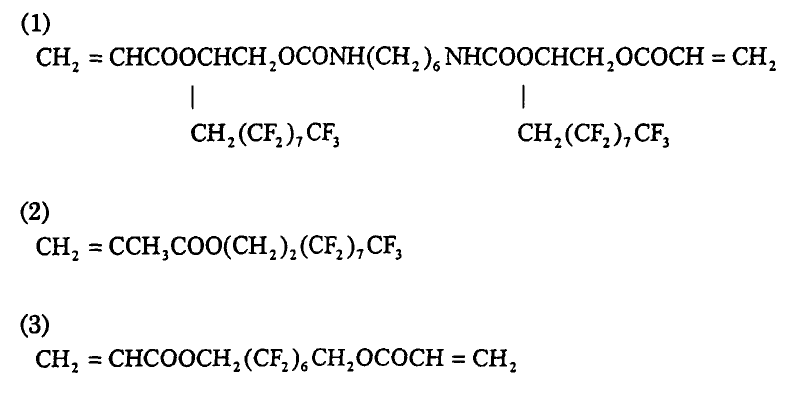

### Examples 3

A quartz glass rod containing Ge as a dopant manufactured by VAD was heated in a drawing furnace to form a core having an outer diameter of 200 µm. A resin composite containing 90 parts by weight of fluoroacrylate resin represented by chemical formula (1), 10 parts by weight of fluoromethacrylate resin represented by chemical formula (2), 1 part by weight of 2-hydroxy-2-methyl-1-phenylpropane-1-one as photopolymerization initiator and 1 part by weight of dimethylethoxyvinyl silane as a coupling agent was provided as a coating by using a dice, in tandem with core formation, and cured by irradiation with ultraviolet ray, so that an inner clad having outer diameter of 215 µm was formed. On this fiber, a resin composite containing 60 parts by weight of fluoroacrylate resin represented by the chemical formula (1), 40 parts by weight of fluoromethacrylate resin represented by the chemical formula (2) and 1 part by weight of 2-hydroxy-2-methyl-1-phenylpropane-1-one as photopolymerization initiator was provided as a coating by a dice, in tandem, cured by irradiation with ultraviolet ray so that an outer clad is formed, whereby a plastic clad optical fiber having an outer diameter of 230 µm was obtained.

### Example 4

The quartz glass rod containing Ge as a dopant manufactured by VAD was heated by a drawing furnace to form a core having an outer diameter of 200 µm. On the core, a resin composite containing 85 parts by weight of fluoroacrylate resin represented by the chemical formula (1), 15 parts by weight of fluoroacrylate resin represented by the chemical formula (3), 1 part by weight of 2-hydroxy-2-methyl-1-phenylpropane-1-one as photopolymerization initiator and 1 part by weight of dimethylethoxyvinyl silane as a coupling agent was provided as a coating by a dice, in tandem with the core formation, cured by irradiation with ultraviolet ray, and thus an inner clad having an outer diameter of 215 µm was formed. On the fiber, a resin composite containing 60 parts by weight of fluoroacrylate resin represented by the chemical formula (1), 40 parts by weight of fluoromethacrylate resin represented by the chemical formula (2), and 1 part by weight of 2-hydxoxy-2-methyl-1-phenylpropane-1-one as a photopolymerization initiator was provided as a coating on th glass fiber by a dice, in tandem, cured by irradiation of ultraviolet ray to form an outer clad, and thus a plastic clad optical fiber having an outer diameter of 230 µm was obtained.

### Comparative Example 2

A quartz glass rod containing Ge as a dopant manufactured by VAD was heated by a drawing furnace to form a glass fiber having an outer diameter of 200 µm, a resin composite containing 70 parts by weight of fluoroacrylate resin represented by the chemical formula (1), 30 parts by weight of fluoromethacrylate resin represented by the chemical formula (2), 1 part by weight of 2-hydroxy-2-methyl-1-phenylpropane-1-one as photopolymerization initiator and 1 part by weight of dimethylethoxyvinyl silane as a coupling agent was provided as a coating on the glass fiber by a dice, in tandem with formation of the glass fiber, cured by irradiation with ultraviolet ray to form a clad, and thus a plastic clad optical fiber having an outer diameter of 230 µm was obtained.

### Comparative Example 3

A quartz glass rod having a quartz glass core portion contaning Ge as a dopant and a pure quartz clad portion, manufactured by VAD with the ratio of the diameter of Ge containing portion with respect to the outer diameter being as shown in Table 1 was heated in a drawing furnace to form a glass fiber having an outer diameter of 200 µm, a thermosetting silicone resin of which refractive index after setting was 1.420 was provided as a coating on the glass fiber by a dice in tandem, and thereafter, the coating was heated by an electric furnace to form an outer clad. Thus, a plastic clad optical fiber having an outer diameter of 230 µm was obtained.

### Comparative Example 4

A quartz glass rod containing Ge as a dopant manufactured by VAD method was heated by a drawing furnace to form a core having an outer diameter of 200 µm, a thermosetting silicone resin of which refractive index after setting was 1.450 was provided as a coating on the core by a dice in tandem, and the coating was set by heating in an electric furnace, so that an inner clad having an outer diameter of 215 µm was formed. A resin composite containing 60 parts by weight of fluoroacrylate resin represented by the chemical formula (1), 40 parts by weight of fluoromethacrylate resin represented by the chemical formula (2), and 1 part by weight of 2-hydroxy-2-methyl-1-phenylpropane-1-one as photopolymerization initiator was provided as a coating on the glass fiber by a dice in tandem, and the coating was cured by irradiation with ultraviolet ray to form an outer clad. Thus, a plastic clad optical fiber having an outer diameter of 230 µm was obtained.

An ETFE (ethylene-tetrafluoroethylene copolymer resin) coating was provided on each of the plastic clad optical fibers thus fabricated. The outer diameter of the fiber after coating was 500 µm. Increase in transmission loss when the fiber was wound ten times around a mandrel having the diameter of 20 mm and transmission bandwidth of each fiber was measured.

Further, aromatic aramid fiber of strength member was laid longitudinally, PVC (polyvinyl chloride) coating was provided and an optical fiber cord having an outer diameter of 2.2 mm was fabricated. Crimp & cleave optical connector attachment was attempted to each of the cords thus obtained.

As can be seen from Table 1, in the plastic clad optical fiber of which ratio of core diameter with respect to the inner clad diameter was smaller than 0.90, though such a significant increase in transmission loss caused by bending as experience in Comparative Example 1 was not observed, transmission bandwidth was significantly degraded.

In the plastic clad optical fiber of which ratio exceeded 0.99, though significant decrease in transmission bandwidth as in Comparative Example 2 was not observed, there was significant increase in transmission loss caused by bending.

In the plastic clad optical fiber of which ratio of core diameter with respect to the inner clad diameter was 0.99 and having silicone resin as an outer clad, significant increase in transmission loss caused by bending and decrease in transmission bandwidth as experienced in Comparative 3 were not observed. However, crimp & cleave optical connector could not be applied.

When the inner clad was formed by plastic, the plastic clad optical fiber in which Young's modulus was smaller than 50 Kg/mm², there was much increase in transmission loss by bending, as can be seen in

### Comparative Example 4.

In the plastic clad optical fiber of Example 4 of which inner clad was formed of photo-curing fluoromethacrylate having at least two unsaturated bonds in the molecule, the Young's modulus was higher than that formed of photo-curing fluoromethacrylate having only one unsaturated bond, and hence increase in transmission loss caused by bending was smaller.

According to the plastic clad optical fiber of the present invention, increase in transmission loss caused by lateral pressure can be suppressed.

According to the method of manufacturing a plastic clad optical fiber in accordance with the present invention, the plastic clad optical fiber which can suppress increase in transmission loss caused by lateral pressure can be manufactured efficiently.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A plastic clad optical fiber, comprising:
a core (1) formed of quartz glass having α power distribution type refractive index profile;
an inner clad (2) provided on an outer periphery of said core, having a prescribed refractive index smaller than the refractive index of the outer peripheral portion of said core, and formed of quartz glass or a plastic having Young's modulus of at least 50 Kg/mm²; and
an outer clad (3) provided on an outer periphery of said inner clad and formed of a plastic having a prescribed refractive index smaller than the refractive index of said inner clad; wherein
ratio of an outer diameter of said core (1) with respect to an outer diameter of said inner clad (2) is 0.90 to 0.99.

2. The plastic clad optical fiber according to claim 1, wherein the plastic constituting said inner clad (2) is a cured resin composite containing photo-curing fluoromethacrylate or fluoroacrylate.

3. The plastic clad optical fiber according to claim 2, wherein said photo-curing fluoromethacrylate or fluoroacrylate is a compound having at least two unsaturate bonds in a molecule.

4. The plastic clad optical fiber according to claim 1, wherein the plastic constituting said outer clad (3) is a cured photo-curable resin composite containing fluoroacrylate or fluoromethacrylate.

5. A method of manufacturing a plastic clad optical fiber, comprising the steps of:
forming a glass fiber consisting of a core (1) and an inner clad (2) by drawing a quartz glass rod consisting of a core portion and an inner clad portion surrounding said core portion; and
forming an outer clad (3) by providing a coating of a resin composite on said glass fiber and curing the coating.

6. The method of manufacturing a plastic clad optical fiber according to claim 5, wherein a quartz glass rod in which said inner clad portion and the core portion are manufactured collectively is used as said quartz glass rod.

7. A method of manufacturing a plastic clad optical fiber, comprising the steps of:
forming a core (1) by drawing a quartz glass rod;
forming an inner clad (2) by providing a coating of a resin composite on said core and curing the coating; and
forming an outer clad (3) by providing a coating of a resin composite on said inner clad (2) and curing the coating.

8. The plastic clad optical fiber according to claim 1, wherein the value of said α is from 1.5 to 3.
